**Europäisches Patentamt**

**European Patent Office**

**Office européen des brevets**

(19)

(11) Veröffentlichungsnummer: **0 114 192**
**B1**

(12) # EUROPÄISCHE PATENTSCHRIFT

(45) Veröffentlichungstag der Patentschrift:
**10.12.86**

(21) Anmeldenummer: **83109439.6**

(22) Anmeldetag: **22.09.83**

(51) Int. Cl.⁴: **B 60 T 15/18,** B 60 T 15/24

(54) **Anhänger-Steuerventil.**

(30) Priorität: **24.12.82 DE 3247949**

(43) Veröffentlichungstag der Anmeldung:
**01.08.84 Patentblatt 84/31**

(45) Bekanntmachung des Hinweises auf die Patenterteilung:
**10.12.86 Patentblatt 86/50**

(84) Benannte Vertragsstaaten:
**DE FR GB IT NL SE**

(56) Entgegenhaltungen:
**DE - A - 2 549 982**
**DE - A - 2 615 893**
**DE - A - 3 044 228**

**"Beschreibung der Druckluftgeräte in Fahrzeugen",**
**Juni 1980, der Firma WABCO Fahrzeugbremsen GmbH**

(73) Patentinhaber: **WABCO Westinghouse**
**Fahrzeugbremsen GmbH, Am Lindener**
**Hafen 21 Postfach 91 12 80, D-3000 Hannover 91 (DE)**

(72) Erfinder: **Schulz, Hans-Joachim, Gilborn 16,**
**D-3002 Wedemark 1 (DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91 (DE)**

**Beschreibung**

Die Erfindung betrifft ein Anhänger-Steuerventil für eine druckluftbetätigte Zweikreis-Zweileitungsbremsanlage gemäss dem Oberbegriff des Patentanspruchs 1.

Bei Zweikreis-Bremsanlagen besteht die Druckluftverbindung zwischen dem Motorfahrzeug und dem Anhänger aus einer Vorratsleitung und einer Bremsleitung. Bei einem Bruch der Anhänger-Bremsleitung wird die Vorratsleitung bei einer Bremsung über die Bruchstelle entlüftet und damit eine Bremsung des Anhängers über die Vorratsleitung ausgelöst. Da jedoch der Luftdruck in den Behältern des Motorfahrzeuges zunächst auf die Sicherheitsdrücke (Schliessdrücke) des Mehrkreis-Schutzventils und des betreffenden Überströmventils fallen muss, würde es unter Umständen viele Sekunden dauern, bis der Druck in der Vorratsleitung unter einen vorbestimmten Wert, gemäss EG-Richtlinien 1,5 bar, fällt und der Anhänger bremst. Als Folge dieser langen Zeitdauer bestünde die Gefahr, dass bei einer Vollbremsung nur das Motorfahrzeug bremst, während die Bremsanlage des Anhängers nicht bzw. viel zu spät anspricht, was vor allem bei schwer beladenen Anhänger-Fahrzeugen zur Folge hätte, dass dieses aufschiebt und der Lastzug einknickt.

Zur Lösung dieses Problems ist es bekannt, an ein Anhänger-Steuerventil gemäss dem Oberbegriff des Patentanspruchs 1 eine schaltbare Drossel anzuflanschen, über welche die Vorratsleitung geführt ist (Gerät 973002 aus Beschreibung der Druckluftgeräte in Fahrzeugen Juni 1980, der Firma WABCO Fahrzeugbremsen GmbH). Die Drossel weist einen Steuerkolben auf, der einerseits vom Steuerdruck des Anhängersteuerventils und andererseits vom Ausgangsdruck des Anhängersteuerventils so beaufschlagt wird, dass die Vorratsleitung bei einem Bruch der Anhänger-Bremsleitung gedrosselt wird. Die somit erreichte Drosselung des Druckluftdurchsatzes durch die Vorratsleitung bewirkt nun eine Entlüftung des der Drossel nachgeschalteten Teiles der Vorratsleitung innerhalb von 2 Sekunden unter den erwähnten Wert von 1,5 bar und ermöglicht somit eine schnelle automatische Bremsung des Anhängers beim Bruch der Anhänger-Bremsleitung.

Aus der DE-OS 2615893 ist ein Anhänger-Steuerventil bekannt, welches zwei vom Bremsdruck aus unterschiedlichen Bremskreisen eines Zugfahrzeugs beaufschlagbare Steuerkolben sowie eine Relaiskolbenanordnung aufweist, die mit einem kombinierten Einlass- und Auslassventil derart zusammenwirkt, dass in Abhängigkeit von dem auf die Steuerkolben einwirkenden Bremsdruck und in Abhängigkeit vom Flächenverhältnis der Steuerkolben und der Relaiskolbenanordnung ein Vorratsdruck in die Anhänger-Bremsleitung eingesteuert wird.

Um bei einem Bruch der Anhänger-Bremsleitung ein das Ansprechen des nachgeschalteten Anhänger-Bremsventils verzögerndes Nachfüllen der Anhänger-Vorratsleitung zu vermeiden, ist am Anhänger-Steuerventil eine Drosselventileinrichtung angeordnet, über welche die Anhänger-Vorratsleitung geführt ist. Die Drosselventileinrichtung weist einen Schaltkolben auf, der einerseits von dem als Steuerdruck dienenden Bremsdruck aus den Bremskreisen des Zugfahrzeugs und andererseits von dem in die Anhänger-Bremsleitung gesteuerten Druck beaufschlagt wird. Bei einem Bruch der Anhänger-Bremsleitung wird der Schaltkolben der Drosselventileinrichtung vom Steuerdruck in eine Stellung gebracht, in welcher ein mit dem Schaltkolben verbundenes Drosselglied den Durchgang durch die Anhänger-Vorratsleitung drosselt.

Sowohl bei dem durch die DE-OS 2615893 bekannten Anhänger-Steuerventil als auch bei dem aus der Beschreibung der Druckluftgeräte in Fahrzeugen bekannten Anhänger-Steuerventil ist die schaltbare Drossel an das Anhänger-Steuerventil angeflanscht. Durch die angeflanschte schaltbare Drossel werden die Abmessungen des Anhänger-Steuerventils vergrössert, was bezüglich des im Kraftfahrzeug vorzusehenden Einbauraumes nicht immer erwünscht ist.

Der Erfindung liegt die Aufgabe zugrunde, ein Anhänger-Steuerventil der eingangs erwähnten Art zu schaffen, bei welchem mit einfachen Mitteln eine Drosselung der Vorratsdruckluft bei einem Defekt an der Anhänger-Bremsleitung bewirkt wird, ohne dass zu diesem Zweck eine Drosseleinrichtung an das Anhänger-Steuerventil angeflanscht werden muss.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die Erfindung bietet insbesondere den Vorteil, durch die Integration der schaltbaren Drossel in das Anhänger-Steuerventil ein einziges kompaktes Gerät zu erhalten. Gemäss einer vorteilhaften Weiterbildung der Erfindung, bei welcher die Drossel von einer zwischen den Relaiskolbenteilen angeordneten Wand gebildet und betätigt wird, bleibt die Drossel auch dann noch funktionsfähig, wenn der erste oder der zweite Bremskreis ausfällt.

Anhand der Zeichnung werden zwei Ausführungsbeispiele der Erfindung nachstehend näher erläutert. Es zeigen:

Fig. 1 ein Anhänger-Steuerventil mit integrierter schaltbarer Drossel, wobei die Drossel von einem zwischen der Mantelfläche des Relaiskolbens und der Führungsbohrung für den Relaiskolben vorgesehenen Spalt gebildet wird, und

Fig. 2 einen Ausschnitt des im Anhänger-Steuerventil angeordneten Relaiskolbens mit einem in Richtung auf die Wandung der Führungsbohrung hin offenen U-förmigen Dichtring, welcher in einer entsprechenden Ausnehmung des Relaiskolbens angeordnet ist und die Funktion einer Drossel hat.

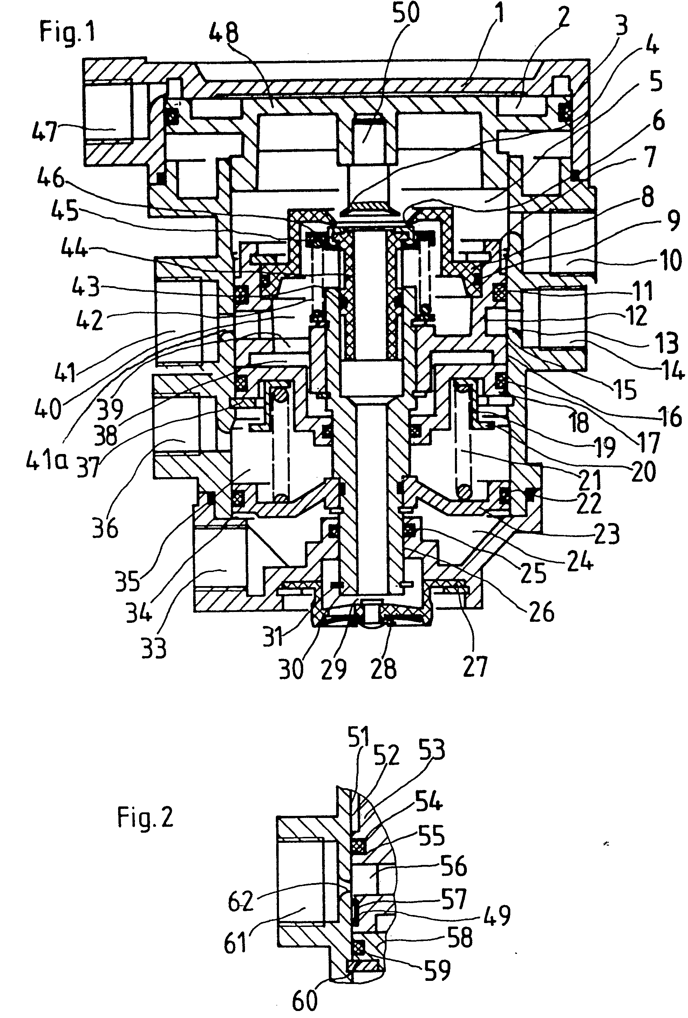

Fig. 1 zeigt ein Anhänger-Steuerventil, in welches eine schaltbare Drossel zur Reduzierung des Vorratsdruckes bei Abriss der Anhänger-Bremsleitung angeordnet ist.

In einem Ventilgehäuse 1 ist ein Steuerkolben 48 angeordnet, welcher eine erste Steuerkammer 2 von einer Druckmittelausgangskammer 5 trennt. Die Steuerkammer 2 ist über einen ersten Steueranschluss 47 mit einem ersten Bremskreis des Motorfahrzeuges verbunden. Über einen Druckmittelausgang 10 steht die Druckmittelausgangskammer 5 mit einer zum Anhänger-Bremsventil eines Anhängerfahrzeuges führenden Anhänger-Bremsleitung in Verbindung. Der Steuerkolben 48 weist einen in Umfangsrichtung verlaufenden Dichtring 3 auf, welcher verhindert, dass Druckmittel von der Steuerkammer 2 in die Druckmittelausgangskammer 5 gelangt. Unterhalb des Steuerkolbens 48 ist ein aus einem ersten Relaiskolbenteil 7, 8 und einem zweiten Relaiskolbenteil 23 bestehender Relaiskolben angeordnet, wobei die beiden Relaiskolbenteile 7, 8 und 23 hintereinander geschaltet und fest miteinander verbunden sind. Ein auf der Umfangsfläche des ersten Relaiskolbenteiles 7, 8 angeordneter Dichtring 1 dichtet die Druckmittelausgangskammer 5 gegen eine gegenüberliegende, auf der anderen Seite des ersten Relaiskolbenteils 7, 8 angeordnete Druckmitteleingangskammer 40 ab. Im ersten Relaiskolbenteil 7, 8 ist zentrisch eine Ausnehmung angeordnet, die im oberen Kolbenteil 8 des ersten Relaiskolbenteils 7, 8 als Ventilsitz 6 ausgebildet ist. Im unteren Kolbenteil 7 des ersten Relaiskolbenteils 7, 8 ist in der Ausnehmung ein abgestuftes Kolbenrohr 30 befestigt. Das freie Ende des Kolbenrohres 30 wird in einer Ausnehmung des Ventilgehäusebodens mittels eines Dichtringes 25 abgedichtet geführt. Im Kolbenrohr 30 ist ein mit einem Dichtring 43 versehener, als Ventilglied 44 ausgebildeter zylindrischer Hohlkörper befestigt, der auf seiner dem Ventilsitz 6 zugewandten Seite ein Dichtelement 45 trägt. Das mit dem Dichtelement 45 versehene Ventilglied 44 bildet mit dem Ventilsitz 6 ein Einlassventil 44, 45, 6 über welches die Druckmitteleingangskammer 40 mit der Druckmittelausgangskammer 5 verbindbar ist. Eine sich an einem Anschlag des Kolbenrohres 30 abstützende Druckfeder 42 beaufschlagt einen am Ventilglied 44 angeordneten Federteller 46 und hält so das mit dem Dichtelement 45 versehene Ventilglied auf dem Ventilsitz 6 des Einlassventils 6, 44, 45. An der der Druckmittelausgangskammer 5 zugewandten Seite des Steuerkolbens 48 ist koaxial zu dem Ventilglied 44 ein Stössel 50 angeordnet, welcher an seinem dem Ventilglied 44 zugewandten Ende einen Dichtkörper 4 trägt. Der mit dem Dichtkörper 4 versehene Stössel 50 bildet mit dem das Dichtelement 45 tragenden Ventilglied 44 ein Auslassventil 50, 4, 44, 45, über welches die Druckmittelausgangskammer 5 mit der Atmosphäre verbindbar ist. Das Einlassventil 6, 44, 45 und das Auslassventil 50, 4, 44, 45 bilden zusammen ein kombiniertes Einlass- und Auslassventil, welches vom Steuerkolben 48 betätigbar ist. Das freie Ende des Kolbenrohres 30 ragt in eine Entlüftungskammer 29, welche von einem zur Atmosphäre hin in die Offenstellung bringbaren Rückschlagventil 27, 28 verschlossen wird. Im freien Endbereich des Kolbenrohres 30 ist ein ringförmiger Anschlag 31 vorgesehen, welcher den Hub des mit dem Kolbenrohr 30 fest verbundenen Relaiskolbens 7, 8, 23 in Richtung auf den Steuerkolben 48 zu begrenzt. Zwischen den beiden Relaiskolbenteilen 7, 8 und 23 ist eine Wand 18 auf dem Kolbenrohr 30 relativ zu den beiden Relaiskolbenteilen 7, 8, 23 verschiebbar angeordnet. Die Wand 18 wird von einer Feder 21, welche sich an dem mit dem Kolbenrohr fest verbundenen zweiten Relaiskolbenteil 23 abstützt in Richtung auf das erste Relaiskolbenteil 7, 8 zu beaufschlagt. Das zweite Relaiskolbenteil 23 trennt eine zweite Steuerkammer 35 von einer dritten Steuerkammer 24. Die dritte Steuerkammer 24 wird von der der Wand 18 abgewandten Seite des zweiten Relaiskolbenteiles 23 begrenzt, und die zweite Steuerkammer 35 wird von der der Wand 18 zugewandten Seite des zweiten Relaiskolbenteiles 23 begrenzt. Das zweite Relaiskolbenteil 23 weist einen in Umfangsrichtung verlaufenden Dichtring 22 auf, der die beiden Steuerkammern 35, 24 gegeneinander abdichtet. Ein die Wand 18 in Umfangsrichtung umschliessender Dichtring 17 verhindert eine Druckmittelverbindung zwischen der zweiten Steuerkammer 35 und einer einerseits vom ersten Relaiskolbenteil 7, 8 und andererseits von der Wand 18 begrenzten Kammer 38. Die Kammer 38 steht über eine im Kolbenteil 8 des ersten Relaiskolbenteiles 7, 8 vorgesehene Ausnehmung 39 mit der Druckmitteleingangskammer 40 in Verbindung. Das untere Kolbenteil 8 des ersten Relaiskolbenteiles 7, 8 ist so bemessen, dass ein zwischen der Wandung der das Relaiskolbenteil 7, 8 aufnehmenden Führungsbohrung 16 und der Mantelfläche 15 des Kolbenteiles 8 verbleibender Spalt eine Drossel 15, 16 bildet, mittels welcher der Durchlassquerschnitt einer mit einem ersten Vorratsanschluss 41 verbundenen Bohrung 41a im Ventilgehäuse veränderbar ist. In der Mantelfläche des ersten Relaiskolbenteiles 7, 8 ist eine als Ringkammer ausgebildete Ausnehmung 12 vorgesehen, über welche der erste Vorratsanschluss 41 mit einem zweiten Vorratsanschluss 14 verbunden ist. Der erste Vorratsanschluss 41 ist an eine Vorratsleitung des Zugfahrzeuges und der zweite Vorratsanschluss 14 ist an die Anhänger-Vorratsleitung anschliessbar. Oberhalb der Ringkammer 12 des ersten Relaiskolbenteiles 7, 8 ist ein Dichtring 11 vorgesehen, welcher die Ringkammer 12 gegen die Druckmittelausgangskammer 5 und gegen den Druckmittelausgang 10 abdichtet. Über einen dritten Steueranschluss 33 ist die dritte Steuerkammer 24 mit einem zweiten Bremskreis des Motorfahrzeuges verbunden. Die zweite Steuerkammer 35 ist über einen zweiten Steueranschluss 36 an ein entlüftendes Handventil oder eine Vorratsleitung des Zugfahrzeuges anschliessbar. Zwischen dem Ende der Feder 21, welches der Wand 18 zugewandt ist und der Wand 18 ist ein als Anschlag 19 dienender Z-förmiger Profilring angeordnet. Bei kurzzeitigem Absinken des Vorratsdruckes in der Druckmitteleingangskammer 40 und nach Überschreiten eines vom Relaiskolben 7, 8, 23 zurückgelegten vorbestimmten Weges ist der Anschlag 19 an einem im Ventilgehäuse 1 angeordneten Ring 37 zur Anlage bringbar, wodurch ein Spannen der Feder 21 bewirkt und eine der auf das zweite Relaiskolbenteil 23 wirkenden Kraft des Druckes der dritten Steuerkammer 24 entgegengerichtete Kraft erzeugt wird.

Die Funktion des im vorstehenden beschriebenen Anhänger-Steuerventils wird nachfolgend näher erläutert.

Bei Betätigung des Motorwagen-Bremsventils strömt Druckluft vom ersten Bremskreis über den ersten Steueranschluss 47 in die erste Steuerkammer 2. Der sich in der Steuerkammer 2 aufbauende Druck verschiebt den Steuerkolben 48 in Richtung auf den Relaiskolben 7, 8 zu. Dabei setzt das mit dem Stössel 50 verbundene Dichtelement 4 auf das Ventilglied 44 auf. Das Auslassventil 4, 50, 44 ist jetzt geschlossen, und das Einlassventil 6, 44, 45 gelangt bei der weiteren Abwärtsbewegung des Steuerkolbens 48 in die Offenstellung. Die in der Druckmitteleingangskammer 40 anstehende Druckluft gelangt durch das geöffnete Einlassventil 6, 44, 45 des kombinierten Einlass- und Auslassventils 6, 44, 45, 50, 4 in die Druckmittelausgangskammer 5 und weiter durch den Druckmittelausgang 10 und die Anhänger-Bremsleitung zum hier nicht gezeigten Anhänger-Bremsventil. Über die Ringkammer 12 des ersten Relaiskolbenteiles 7, 8 und den zweiten Vorratsanschluss 14 steht der erste Vorratsanschluss 41 ständig mit dem mit der Vorratsleitung verbundenen zweiten Vorratsanschluss 14 in Verbindung. Über den zweiten Steueranschluss 36 ist die zweite Steuerkammer 35 mit dem Handbremsventil des Motorfahrzeuges verbunden. Der sich in der Druckmittelausgangskammer 5 aufbauende Druck beaufschlagt die der ersten Steuerkammer 2 abgewandte Seite des Steuerkolbens 48 und bewegt diesen gegen die vom Druck in der ersten Steuerkammer 2 auf den Steuerkolben 48 einwirkende entgegengerichtete Kraft in Richtung auf die erste Steuerkammer 2 zu. Das Einlassventil 6, 44, 45 gelangt in die Schliessstellung, und eine Abschlussstellung ist erreicht. Gleichzeitig mit den im vorstehenden beschriebenen Vorgängen erfolgt vom zweiten Bremskreis über den dritten Steueranschluss 33 eine Belüftung der dritten Steuerkammer 24 und somit eine Druckbeaufschlagung des zweiten Relaiskolbenteiles 23 in Richtung auf die zweite Steuerkammer 35 zu. Da jedoch die Kraft des in der Druckmittelausgangskammer 5 anstehenden und das erste Relaiskolbenteil 7, 8 beaufschlagenden Druckes und die Kraft des in der zweiten Steuerkammer 35 vom Handbremsventil anstehenden und das zweite Relaiskolbenteil beaufschlagenden Druckes überwiegen, verändert sich die Lage des Relaiskolbens 7, 8, 23 nicht.

Fällt durch einen Defekt der erste Bremskreis des Motorfahrzeuges aus, so verschiebt der in der dritten Steuerkammer 24 aus dem zweiten Bremskreis anstehende Druck das zweite Relaiskolbenteil 23 nach oben in Richtung auf die zweite Steuerkammer 35 zu. Das über das Kolbenrohr 30 mit dem zweiten Relaiskolbenteil 23 verbundene erste Relaiskolbenteil 7, 8 wird vom zweiten Relaiskolbenteil 23 in Richtung auf die Druckmittelausgangskammer 5 zu verschoben. Dabei gelangt das Einlassventil 6, 44, 45 in die Offenstellung. Über den Druckmittelausgang 10 wird Druckluft in die Anhänger-Bremsleitung eingesteuert. Die Wand 18 wird über die Feder 21 vom zweiten Relaiskolbenteil 23 soweit mitgenommen, bis der Anschlag 19, 20 mit seinem Schenkel 20 am Ring 37 zur Anlage kommt und so den Hub der Wand 18 begrenzt. Die Kraft der Feder 21 wirkt jetzt nur noch auf das zweite Relaiskolbenteil 23, so dass eine weitere Aufwärtsbewegung des Relaiskolbens 7, 8, 23 verhindert wird.

Durch diese Massnahme wird verhindert, dass die Drosselstelle 15, 16 des Relaiskolbenteiles 7, 8 vor den Durchlass 41a des ersten Vorratsanschlusses 41 geschoben wird und somit eine ungewollte Drosselung der Druckmittelzufuhr zur Anhänger-Bremsleitung und zum Anhänger-Vorratsbehälter erfolgt (Druckmittelausgang 10, zweiter Vorratsanschluss 14).

Wird die erste Steuerkammer 2 entlüftet, so überwiegt der Druck in der Druckmittelausgangskammer 5. Der Steuerkolben 48 fährt nach oben in Richtung auf die erste Steuerkammer 2 zu und öffnet so das Auslassventil 4, 50, 44, 45. Die Anhänger-Bremsleitung wird über den Druckmittelausgang 10, die Druckmittelausgangskammer 5, das geöffnete Auslassventil 4, 50, 44, 45 sowie durch das Kolbenrohr 30 und das Rückschlagventil 28 zur Atmosphäre hin entlüftet. Der zweite Vorratsanschluss 14 bleibt weiterhin über die in der Mantelfläche des ersten Relaiskolbenteiles 7, 8 angeordnete Ringkammer 12 mit dem ersten Vorratsanschluss 41 verbunden.

Bei einem Bruch der Anhänger-Bremsleitung sinkt der Druck in der Druckmittelausgangskammer 5 ab. Der Druck in der dritten Steuerkammer 24 überwiegt jetzt und verschiebt mittels des zweiten Relaiskolbenteiles 23 den Relaiskolben 7, 8, 23 in Richtung auf die Druckmittelausgangskammer 5 zu. Die Wand 18 löst sich bei diesem Vorgang vom Anschlag 19, 20, bleibt in Kontakt mit dem ersten Relaiskolbenteil 7, 8 und hält somit das Gleichgewicht in der zweiten Steuerkammer 35. Die vom Druck in der zweiten Steuerkammer 35 auf die Wand 18 ausgeübte Kraft und die vom Druck in der zweiten Steuerkammer 35 auf das zweite Relaiskolbenteil 23 entgegengerichtet ausgeübte Kraft stehen jetzt im Gleichgewicht. Vom Druck aus der dritten Steuerkammer 24 wird der Relaiskolben 7, 8, 23 so weit nach oben in Richtung auf die Druckmittelausgangskammer 5 zu verschoben, bis der Durchlassquerschnitt der im Ventilgehäuse 1 vorgesehenen Bohrung 41a, welche mit dem ersten Vorratsanschluss 41 verbunden ist, von der Wandung des ersten Relaiskolbenteiles 7, 8 überdeckt ist und somit nur noch gedrosselt Vorratsluft zum zweiten Vorratsanschluss 14 gelangt. Die eingangs erwähnte Forderung, dass nach Bruch der Anhänger-Bremsleitung der Druck in der Vorratsleitung zum Anhänger auf höchstens 1,5 bar innerhalb von zwei Sekunden nach dem Betätigen des Motorwagen-Bremsventils abgesunken sein muss, wird jetzt erfüllt. Der sich in der Anhänger-Vorratsleitung abbauende Druck führt somit zur Zwangsbremsung des Anhängers.

Fig. 2 zeigt einen Ausschnitt eines Anhänger-Steuerventils, welches eine integrierte schaltbare Drossel zur Drosselung der Druckmittelzufuhr bei Abriss der Anhänger-Bremsleitung aufweist.

In einer Führungsbohrung 51 des Ventilgehäuses ist ein Relaiskolben 53 verschiebbar angeordnet. Der Relaiskolben 53 weist eine in Umfangsrichtung verlaufende Nut 55 auf, in welcher ein Dichtring 54 gelagert ist. Der Dichtring 54 dichtet eine Druckmitteleingangskammer gegen eine Druckmittelausgangskammer 52 ab. Unterhalb der den Dichtring 54 aufnehmenden Nut 55 ist eine weitere, in Umfangsrichtung des Relaiskolbens 53 verlaufende Nut vorgesehen, welche als Ringkammer 56 zur Verbindung eines ersten Vorratsanschlusses 61 mit einem zu einer Anhänger-Vorratsleitung führenden zweiten Vorratsanschluss dient. In einer weiteren in Umfangsrichtung des Relaiskolbens 53 verlaufenden Ausnehmung 49, welche sich unterhalb der Ringkammer 56 befindet, ist ein als Drossel 57 dienender Profilring angeordnet. Der Profilring weist U-Profil auf. Die Enden der freien Schenkel des U-Profils liegen an der Wandung der Führungsbohrung 51 an. Eine mit einem Dichtring 59 versehene Wand 58, welche auf einem ringförmigen Anschlag 60 aufliegt, steht mit dem Relaiskolben 53 in Wirkverbindung.

Im Normalbetrieb nimmt der Relaiskolben 53 eine Lage ein, in der eine mit dem ersten Vorratsanschluss 61 in Verbindung stehende Bohrung 62 mit der Ringkammer 56 fluchtet. Der dem ersten Vorratsanschluss 61 gegenüberliegende, hier nicht gezeigte zweite Vorratsanschluss, steht in gleicher Weise mit der Ringkammer 56 in Verbindung, so dass im Normalbetrieb der erste Vorratsanschluss 61 über die Bohrung 62 und die Ringkammer 56 ständig mit dem zur Anhänger-Vorratsleitung führenden zweiten Vorratsanschluss verbunden ist.

Bei einem Bruch der Anhänger-Bremsleitung sinkt der Druck in der Druckmittel-Ausgangskammer 52 ab. Der das nicht dargestellte zweite Relaiskolbenteil beaufschlagende Druck überwiegt und verschiebt das zweite Relaiskolbenteil und somit auch das erste Relaiskolbenteil 53 aufwärts, in Richtung auf die Druckmittelausgangskammer 52 zu. Der Hub des Relaiskolbens ist so bemessen, dass der als Drossel 57 dienende Profilring vor die Bohrung 62 des ersten Vorratsanschlusses 61 gelangt. Die vom ersten Vorratsanschluss 61 kommende Druckluft gelangt jetzt nur noch gedrosselt zum zweiten Vorratsanschluss. Durch entsprechende Dimensionierung des U-Profils kann der Grad der Drosselung bestimmt werden. Es ist möglich, eine Feder vorzusehen, welche den Profilring 57 in Richtung auf die Wandung der Führungsbohrung 51 des Relaiskolbens 53 zu beaufschlagt.

Anstatt in der Wandung des ersten Relaiskolbenteiles 7, 8 oder in der Mantelfläche der Wand 18 eine als Drossel dienende Ausnehmung (U-Profilring 57) anzuordnen, kann auch in der Wandung der das erste Relaiskolbenteil 7, 8 bzw. der die Wand 18 aufnehmenden Führungsbohrung 51 eine Ausnehmung vorgesehen werden, die an die mit dem ersten Vorratsanschluss 41 bzw. 61 verbundene Bohrung 41a bzw. 62 anschliesst und bei Abdecken der Bohrung 41a bzw. 62 als Drossel dient.

Wird an der zwischen den beiden Relaiskolbenteilen 7, 8, 23 verschiebbar angeordneten Wand 18 ein Fortsatz vorgesehen, mittels welchem die im Ventilgehäuse angeordnete und mit dem ersten Vorratsanschluss 41 bzw. 61 verbundene Bohrung 41a bzw. 62 abdeckbar ist, so kann am ersten Relaiskolbenteil 7, 8 oder auch am Kolbenrohr 30 ein Anschlag vorgesehen werden, an welchem die Wand 18 zur Anlage bringbar ist. Es ist auch möglich, auf eine derartige Wirkverbindung zwischen dem ersten Relaiskolbenteil 7, 8 und der Wand 18 zu verzichten, wenn die vom Vorratsdruck aus der Druckmitteleingangskammer 40 beaufschlagte Wirkfläche und die vom Druck aus der zweiten Steuerkammer 35 beaufschlagte Wirkfläche der Wand 18 so ausgelegt sind, dass die einander entgegengerichtet auf die Wand 18 einwirkenden Kräfte sich im Gleichgewicht befinden. Von Vorteil ist es in diesem Fall, zwischen dem ersten Relaiskolbenteil 7, 8 und der Wand 18 eine relativ schwache Feder anzuordnen, um zu verhindern, dass bei einem kurzzeitigen Druckabfall in der Druckmitteleingangskammer 40, bedingt durch das Öffnen des Einlassventils 6, 44, 45 beim Einleiten einer Druckeinsteuerung in die Anhänger-Bremsleitung (Druckmittelausgang 10), die mit dem als Drosselelement dienenden Fortsatz versehene Wand vom Druck in der zweiten Steuerkammer 35 in Richtung auf die Druckmitteleingangskammer 40 zu verschoben und so eine ungewollte Drosselung bewirkt wird.

Es ist in allen Fällen darauf zu achten, dass die der Druckmitteleingangskammer zugewandte Wirkfläche des ersten Relaiskolbenteiles 7, 8 und die der zweiten Steuerkammer 35 zugewandte Wirkfläche des zweiten Relaiskolbenteiles 23 so bemessen sind, dass die auf das zweite Relaiskolbenteil 23 vom Druck in der zweiten Steuerkammer 35 ausgeübte Kraft grösser ist als die vom Druck in der Druckmitteleingangskammer 40 entgegengerichtet auf das erste Relaiskolbenteil 7, 8 einwirkende Kraft, um so den Relaiskolben 7, 8, 23 bei intakten Druckmittelanschlüssen in seiner unteren Lage zu halten.

**Patentansprüche**

1. Anhänger-Steuerventil für eine druckluftbetätigte Zweikreis-Zweileitungsbremsanlage mit einer zwischen dem Zugfahrzeug und dem Anhängerfahrzeug angeordneten Anhänger-Vorratsleitung und mit einer ebenfalls zwischen dem Zugfahrzeug und dem Anhängerfahrzeug angeordneten Anhänger-Bremsleitung mit folgenden Merkmalen:

a) es ist eine erste von einem Steuerkolben (48) begrenzte Steuerkammer (2) vorgesehen, die über einen ersten Steueranschluss (47) an den ersten Bremskreis des Zugfahrzeuges anschliessbar ist;

b) es ist ein Relaiskolben vorgesehen, welcher aus einem ersten Relaiskolbenteil (7, 8) und einem zweiten Relaiskolbenteil (23) besteht, wobei die beiden Relaiskolbenteile (7, 8, 23) hintereinandergeschaltet und fest miteinander verbunden sind;

c) das erste Relaiskolbenteil (7, 8) bildet mit einem Ventilelement (45) und zwei Ventilsitzen (6, 4) ein vom Steuerkolben (48) betätigbares kombiniertes Einlass- und Auslassventil (45, 6, 4);

d) es ist eine Druckmitteleingangskammer (40) vorgesehen, welche einerseits vom ersten Relaiskolbenteil (7, 8) und andererseits von einer zwischen den beiden Relaiskolbenteilen (7, 8, 23) angeordneten Wand (18) begrenzt wird und über einen ersten Vorratsanschluss (41) an eine Vorratsleitung des Zugfahrzeuges anschliessbar und über einen zweiten Vorratsanschluss (14) an die Anhänger-Vorratsleitung anschliessbar ist;

e) es ist eine Druckmittelausgangskammer (5) vorgesehen, welche einerseits vom Steuerkolben (48) und andererseits vom ersten Relaiskolbenteil (7, 8) begrenzt wird und über einen Druckmittelausgang (10) an die Anhänger-Bremsleitung anschliessbar ist;

f) die Druckmittelausgangskammer (5) ist über das kombinierte Einlass- und Auslassventil (45, 6, 4) wahlweise mit der Druckmitteleingangskammer (40) oder mit der Atmosphäre verbindbar;

g) es ist eine zweite Steuerkammer (35) vorgesehen, welche einerseits von der Wand (18) und andererseits vom zweiten Relaiskolbenteil (23) begrenzt wird und über einen zweiten Steueranschluss (36) an ein entlüftendes Handbremsventil oder eine Vorratsleitung des Zugfahrzeuges anschliessbar ist;

h) es ist eine dritte Steuerkammer (24) vorgesehen, welche von der der zweiten Steuerkammer (35) abgewandten Seite des zweiten Relaiskolbenteiles (23) begrenzt wird und über einen dritten Steueranschluss (33) an den zweiten Bremskreis des Zugfahrzeuges anschliessbar ist; gekennzeichnet durch die folgenden Merkmale:

i) die Wand (18) ist relativ zu den beiden Relaiskolbenteilen (7, 8, 23) abgedichtet verschiebbar angeordnet;

k) zwischen dem ersten Vorratsanschluss (41) und der Druckmitteleingangskammer (40) ist ein in seinem Durchlassquerschnitt veränderbarer Durchlass (41a) angeordnet;

l) der Durchlass (41a) einerseits und/oder das erste Relaiskolbenteil (7, 8) oder die Wand (18) andererseits sind so angeordnet und so ausgebildet, dass der Durchlassquerschnitt bei einer Bewegung der Wand (18) in Richtung von der zweiten Steuerkammer (35) weg oder bei einer entsprechenden Bewegung des ersten Relaiskolbenteiles (7, 8) verringerbar ist.

2. Anhänger-Steuerventil nach Anspruch 1, dadurch gekennzeichnet, dass der veränderbare Durchlass von einer Bohrung (41a) des Ventilgehäuses und dem ersten Relaiskolbenteil (7, 8) gebildet wird.

3. Anhänger-Steuerventil nach Anspruch 1, dadurch gekennzeichnet, dass der veränderbare Durchlass von einer Bohrung (41a) des Ventilgehäuses und der Wand (18) gebildet wird.

4. Anhänger-Steuerventil nach wenigstens einem der vorhergehenden Ansprüche, dadurch gekennzeichnet, dass das erste Relaiskolbenteil (53) eine im Bereich der Bohrung (62) des Ventilgehäuses angeordnete Ausnehmung (49) aufweist, deren Überdeckung mit der Bohrung des Ventilgehäuses den Durchlassquerschnitt bestimmt.

5. Anhänger-Steuerventil nach wenigstens einem der vorhergehenden Ansprüche, dadurch gekennzeichnet, dass die der Druckmitteleingangskammer (40) zugewandte Wirkfläche des ersten Relaiskolbenteiles (7, 8) und die der zweiten Steuerkammer (35) zugewandte Wirkfläche des zweiten Relaiskolbenteiles (23) so bemessen sind, dass die auf das zweite Relaiskolbenteil (23) vom Druck in der zweiten Steuerkammer (35) ausgeübte Kraft grösser ist als die vom Druck in der Druckmitteleingangskammer (40) auf das erste Relaiskolbenteil (7, 8) ausgeübte Kraft.

6. Anhänger-Steuerventil nach wenigstens einem der vorhergehenden Ansprüche, dadurch gekennzeichnet, dass die Wand (18) am ersten Relaiskolbenteil (7, 8) zur Anlage bringbar ist.

7. Anhänger-Steuerventil nach wenigstens einem der vorhergehenden Ansprüche, gekennzeichnet durch die folgenden Merkmale:

a) in der zweiten Steuerkammer (35) ist eine Feder (21) vorgesehen, welche sich auf dem zweiten Relaiskolbenteil (23) abstützt und die Wand (18) in Richtung auf das erste Relaiskolbenteil (7, 8) zu beaufschlagt;

b) zwischen der Wand (18) und dem die Wand (18) beaufschlagenden Ende der Feder (21) ist ein Anschlag (19, 20) vorgesehen, welcher bei kurzzeitigem Absinken des Vorratsdruckes in der Druckmitteleingangskammer (40) und nach Überschreiten eines vom Relaiskolben (7, 8, 23) zurückgelegten vorbestimmten Weges ein Spannen der Feder (21) bewirkt, wodurch eine der auf das zweite Relaiskolbenteil (23) wirkenden Kraft des Druckes in der dritten Steuerkammer (24) entgegengerichtete Kraft erzeugt wird.

8. Anhänger-Steuerventil nach wenigstens einem der vorhergehenden Ansprüche, dadurch gekennzeichnet, dass an der Wand (18) ein Fortsatz vorgesehen ist, mittels welchem bei einer Bewegung der Wand (18) in Richtung auf die Druckmitteleingangskammer (40) zu der Durchlassquerschnitt der im Ventilgehäuse vorgesehenen Bohrung (41a) veränderbar ist.

9. Anhänger-Steuerventil nach wenigstens einem der vorhergehenden Ansprüche, dadurch gekennzeichnet, dass in der Wandung des ersten Relaiskolbenteiles (7, 8) oder in der Wandung des Fortsatzes der Wand (18) eine umlaufende Nut vorgesehen ist, welche mit der Bohrung (62) des Ventilgehäuses verbindbar ist.

10. Anhänger-Steuerventil nach Anspruch 9, dadurch gekennzeichnet, dass in der Nut ein Ring (57) mit U-Profil angeordnet ist, derart, dass die freien Schenkel des U-Profils an der Führungsbohrung für das erste Relaiskolbenteil (53) oder die Wand (58) anliegen.

11. Anhänger-Steuerventil nach Anspruch 10, dadurch gekennzeichnet, dass der Ring (57) in Richtung auf die Wandung der Führungsbohrung zu von einem Federelement beaufschlagt wird.

12. Anhänger-Steuerventil nach wenigstens einem der vorhergehenden Ansprüche, dadurch gekennzeichnet, dass in der Wandung der Führungsbohrung eine Ausnehmung vorgesehen ist, welche an die Bohrung im Ventilgehäuse angrenzt und bei abgedeckter Bohrung als verringerter Durchlassquerschnitt für den Vorratsdruck dient.

**Claims**

1. Trailer-control valve for a pneumatic dual-circuit-dual-line brake system having a trailer supply line arranged between the traction vehicle and the trailer vehicle and a trailer brake line also arranged between the traction vehicle and the trailer vehicle, having the following features:

a) a first control chamber (2) bounded by a control piston (48) is provided which can be connected by way of a first control connection (47) to the first brake circuit of the traction vehicle;

b) a relay piston is provided which comprises a first relay piston part (7, 8) and a second relay piston part (23), the two relay piston parts (7, 8, 23) being connected one behind the other and rigidly connected to one another;

c) the first relay piston part (7, 8) together with a valve element (45) and two valve seats (6, 4) forms a combined inlet and outlet valve (45, 6, 4) that can be actuated by the control piston (48);

d) a pressure-medium inlet chamber (40) is provided which is bounded on one side by the first relay piston part (7, 8) and on the other side by a wall (18) arranged between the two relay piston parts (7, 8, 23) and can be connected by way of a first supply connection (41) to a supply line of the traction vehicle and by way of a second supply connection (14) to the trailer supply line;

e) a pressure-medium outlet chamber (5) is provided which is bounded on one side by the control piston (48) and on the other side by the first relay piston part (7, 8) and can be connected by way of a pressure-medium outlet (10) to the trailer brake line;

f) the pressure-medium outlet chamber (5) can be connected by way of the combined inlet and outlet valve (45, 6, 4) either to the pressure-medium inlet chamber (40) or to the atmosphere;

g) a second control chamber (35) is provided which is bounded on one side by the wall (18) and on the other side by the second relay piston part (23) and can be connected by way of a second control connection (36) to a venting hand-brake valve or a supply line of the traction vehicle;

h) a third control chamber (24) is provided which is bounded by the side of the second relay piston part (23) that is remote from the second control chamber (35), and can be connected by way of a third control connection (33) to the second brake circuit of the traction vehicle; characterised by the following features:

i) the wall (18) is arranged in such a manner that it can be displaced in a sealed manner relative to the two relay piston parts (7, 8, 23);

k) arranged between the first supply connection (41) and the pressure-medium inlet chamber (40) is an opening (41a) of adjustable cross-section;

l) the opening (41a) on the one hand and/or the first relay piston part (7, 8) or the wall (18) on the other are so arranged and so designed that the cross-section of the opening can be reduced by movement of the wall (18) in the direction away from the second control chamber (35) or a corresponding movement of the first relay piston part (7, 8).

2. Trailer-control valve according to claim 1, characterised in that the adjustable opening is formed by a drilled hole (41a) in the valve housing and the first relay piston part (7, 8).

3. Trailer-control valve according to claim 1, characterised in that the adjustable opening is formed by a drilled hole (41a) in the valve housing and the wall (18).

4. Trailer-control valve according to at least one of the preceding claims, characterised in that the first relay piston part (53) has a recess (49) arranged in the region of the drilled hole (62) in the valve housing, the coincidence of which recess with the drilled hole in the valve housing determines the cross-section of the opening.

5. Trailer-control valve according to at least one of the preceding claims, characterised in that the active surface of the first relay piston part (7, 8) facing the pressure-medium inlet chamber (40) and the active surface of the second relay piston part (23) facing the second control chamber (35) are so dimensioned that the force exerted on the second relay piston part (23) by the pressure in the second control chamber (35) is greater than the force exerted on the first relay piston part (7, 8) by the pressure in the pressure-medium inlet chamber (40).

6. Trailer-control valve according to at least one of the preceding claims, characterised in that the wall (18) can be brought to rest against the first relay piston part (7, 8).

7. Trailer-control valve acording to at least one of the preceding claims, characterised by the following features:

a) a spring (21) is provided in the second control chamber (35), which spring is supported on the second relay piston part (23) and acts on the wall (18) in the direction towards the first relay piston part (7, 8);

b) a stop (19, 20) is provided between the wall (18) and the end of the spring (21) that acts on the wall (18), which stop causes tensioning of the spring (21) when there is a short-term drop in the supply pressure in the pressure-medium inlet chamber (40) and when the relay piston (7, 8, 23) has moved more than a predetermined distance, as a result of which a force directed against the force of the pressure in the third control chamber (24) acting on the second relay piston part (23) is produced.

8. Trailer-control valve according to at least one of the preceding claims, characterised in that there is provided on the wall (18) a projection by means of which the cross-section of the drilled hole (41a) provided in the valve housing can be altered by a movement of the wall (18) in the direction towards the pressure-medium inlet chamber (40).

9. Trailer-control valve according to at least one of the preceding claims, characterised in that in the wall of the first relay piston part (7, 8) or in the wall of the projection of the wall (18) a circumferential groove is provided which can be connected to the drilled hole (62) in the valve housing.

10. Trailer-control valve according to claim 9, characterised in that a ring (57) of U-shaped cross-section is arranged in the groove in such a manner that the free ends of the U-shape cross-section rest against the guide bore for the first relay piston part (53) or the wall (58).

11. Trailer-control valve according to claim 10, characterised in that the ring (57) is urged in the direction towards the wall of the guide bore by a spring element.

12. Trailer-control valve according to at least one of the preceding claims, characterised in that provided in the wall of the guide bore is a recess which is adjacent the drilled hole in the valve housing and serves as an opening of reduced cross-section for the supply pressure when the drilled hole is covered.

**Revendications**

1. Valve de commande-de remorque pour une installation de freinage à air comprimé à deux circuits et deux conduites, comprenant une conduite de frein de secours ou conduite automatique de remorque, interposée entre le véhicule tracteur et la remorque et une conduite de freinage ou conduite de service de la remorque également interposée entre le véhicule tracteur et la remorque, cette valve présentant les particularités suivantes:

a) il est prévu une première chambre de commande (2) limitée par un piston de commande (48) et qui peut être raccordée au premier circuit de freinage du véhicule tracteur par l'intermédiaire d'une premier raccord de commande (47);

b) il est prévu un piston de relais qui est composé d'une première partie de piston de relais (7, 8) et d'une deuxième partie de piston de relais (23), les deux parties (7, 8, 23) du piston de relais étant disposées l'une à la suite de l'autre et étant reliées rigidement l'une à l'autre;

c) la première partie (7, 8) du piston de relais forme avec un clapet (45) et deux sièges de soupapes (6, 4), une valve d'admission et d'échappement combinée (45, 6, 4) pouvant être commandée par le piston de commande (48);

d) il est prévu une chambre d'entrée de fluide sous pression (40) qui est limitée, d'une part, par la première partie (7, 8) du piston de relais et, d'autre part, par une cloison (18) disposée entre les deux parties (7, 8, 23) du piston de relais, et peut être raccordée à une conduite automatique du véhicule tracteur par l'intermédiaire d'un premier raccord de conduite automatique (41) et être raccordée à la conduite automatique de la remorque par l'intermédiaire d'un deuxième raccord de conduite automatique (14);

e) il est prévu une chambre de sortie de fluide sous pression (5) qui est limitée, d'une part, par le piston de commande (48) et, d'autre part, par la première partie (7, 8) du piston de relais, et qui peut être raccordée à la conduite de service de la remorque par l'intermédiaire d'une sortie de fluide sous pression (10);

f) la chambre de sortie de fluide sous pression (5) peut être reliée sélectivement à la chambre d'entrée de fluide sous pression (40) ou à l'atmosphère par l'intermédiaire de la valve d'admission et d'échappement combinée (45, 6, 4);

g) il est prévu une deuxième chambre de commande (35) qui est limitée, d'une part, par la cloison (18) et, d'autre part, par la deuxième partie (23) du piston de relais, et qui peut être raccordée, par l'intermédiaire d'un deuxième raccord de commande (36), à une valve de freinage manuelle qui met à l'échappement ou à une conduite automatique du véhicule tracteur;

h) il est prévu une troisième chambre de commande (24) qui est limitée par la face de la deuxième partie (23) du piston de relais qui est la plus éloignée de la deuxième chambre de commande (35) et peut être raccordée au deuxième circuit de freinage du véhicule tracteur par l'intermédiaire d'un troisième raccord de commande (33);

caractérisée par les particularités suivantes:

i) la cloison (18) est montée de façon à pouvoir coulisser à joint étanche par rapport aux deux parties (7, 8, 23) du piston de relais;

j) un passage (41a) à section libre variable est interposé entre le premier raccord de conduite automatique (41) et la chambre d'entrée de fluide sous pression (40);

k) le passage (41a), d'une part, et/ou la deuxième partie (7, 8) du piston de relais ou la cloison (18), d'autre part, sont disposés et agencés de manière que, en présence d'un déplacement de la cloison (18) dans le sens qui l'éloigne de la deuxième chambre de commande (35) ou d'un mouvement correspondant de la première partie (7, 8) du piston de relais, la section libre du passage peut décroître.

2. Valve de commande de remorque selon la revendication 1, caractérisée en ce que le passage variable est formé par un perçage (41a) du boîtier de la valve et par la première partie (7, 8) du piston de relais.

3. Valve de commande de remorque selon la revendication 1, caractérisée en ce que le passage variable est formé par un perçage (41a) du boîtier de la valve et la cloison (18).

4. Valve de commande de remorque selon au moins l'une des revendications précédentes, caractérisée en ce que la première partie (53) du piston de relais présente un évidement (49) disposé dans la région du perçage (62) du boîtier de la valve et dont le recouvrement avec le perçage du boîtier de la valve détermine la section libre du passage.

5. Valve de commande de remorque selon au moins l'une des revendications précédentes, caractérisée en ce que la surface active de la première partie (7, 8) du piston de relais qui est dirigée vers la chambre d'entrée de fluide sous pression (40) et la surface active de la deuxième partie (23) du piston de relais qui est dirigée vers la deuxième chambre de commande (35) sont dimensionnées de manière que la force exercée sur la deuxième partie (23) du piston de relais par la pression régnant dans la deuxième chambre de commande (35) soit plus grande que la force exercée sur la première partie (7, 8) du piston de relais par la pression régnant dans la chambre d'entrée de fluide sous pression (40).

6. Valve de commande de remorque selon au moins l'une des revendications précédentes, caractérisée en ce que la cloison (18) peut être mise en appui contre la première partie (7, 8) du piston de relais.

7. Valve de commande de remorque selon au moins l'une des revendications précédentes, caractérisée par les particularités suivantes:

a) dans la deuxième chambre de commande (35), est prévu un ressort (21) qui s'appuie contre la deuxième partie (23) du piston de relais et charge la cloison (18) dans le sens allant vers la première partie (7, 8) du piston de relais;

b) entre la cloison (18) et l'extrémité du ressort (21) qui charge la paroi (18), est prévue une butée (19, 20) qui, dans le cas d'une chute brève de la pression de freinage automatique dans la chambre d'entrée de fluide sous pression (40), et lorsque la course parcourue par le piston de relais (7, 8, 23) excède une distance prédéterminée, détermine une tension du ressort (21), ce qui développe une force antagoniste à la force de la pression régnant dans la troisième chambre de commande (24) qui agit sur la deuxième partie (23) du piston de relais.

8. Valve de commande de remorque selon au moins l'une des revendications précédentes, caractérisée en ce que, sur la cloison (18), est prévu un prolongement sous l'effet duquel, en présence d'un déplacement de la cloison (18) vers la chambre d'entrée de fluide sous pression (40) la section de passage du perçage (41a) prévu dans le boîtier de la valve peut varier.

9. Valve de commande de remorque selon au moins l'une des revendications précédentes, caractérisée en ce que, dans la paroi de la première partie (7, 8) du piston de relais ou dans la paroi du prolongement de la cloison (18), est prévue une gorge circonférentielle qui peut être reliée au perçage (62) du boîtier de la valve.

10. Valve de commande de remorque selon la revendication 9, caractérisée en ce qu'une bague (57) à profil en U est disposée dans la gorge de telle manière que les branches libres du profil en U s'appuient contre le perçage de guidage de la première partie (53) du piston de relais ou contre la cloison (58).

11. Valve de commande de remorque selon la revendication 10, caractérisée en ce que la bague (57) est chargée par un élément élastique qui tend à la pousser vers la paroi du perçage de guidage.

12. Valve de commande de remorque selon l'une des revendications précédentes, caractérisée en ce que, dans la paroi du perçage de guidage, est prévu un évidement qui est adjacent au perçage du boîtier de la valve et qui, lorsque ce perçage est masqué, joue le rôle d'une section de passage réduite pour la pression de freinage automatique.

Fig.1

Fig.2

0114192